# EUROPEAN PATENT SPECIFICATION

(11) **EP 2 012 269 B1**
(45) Date of publication and mention of the grant of the patent: **18.05.2011**
(21) Application number: 07111821.0
(22) Date of filing: 05.07.2007
(51) Int. Cl.: G06T 1/00

(54) **Method for embedding a multi-bit digital watermark in media data**
Verfahren zur Einbettung eines digitalen Multi-Bit-Wasserzeichens in Mediendaten
Procédé pour insérer un filigrane numérique multi-bits dans des données de média

(43) Date of publication of application: 07.01.2009
(73) Proprietor: Fraunhofer-Gesellschaft zur Förderung der angewandten Forschung e.V., 80686 München (DE)
(72) Inventor: Steinebach, Martin, 64859, Eppertshausen (DE); Zmudzinski, Sascha, 60316, Frankfurt (DE)
(74) Representative: von Kreisler Selting Werner

(56) References cited:
- EP-A- 1 569 223
- US-A1- 2005 154 892
- US-A1- 2007 092 103
- FRIDRICH J ET AL: "Robust hash functions for digital watermarking" PROCEEDINGS INTERNATIONAL CONFERENCE ON INFORMATION TECHNOLOGY: CODING AND COMPUTING (CAT. NO.PR00540) IEEE COMPUT. SOC LOS ALAMITOS, CA, USA, 2000, pages 178-183, XP002474318 ISBN: 0-7695-0540-6

## Description

The present invention relates to a method for embedding a multi-bit digital watermark in media data such as video, image, and/or audio data comprising a plurality of consecutive sections.

The process of embedding a digital watermark into a media file is often complex and time consuming as multiple operations take place within the process to ensure a high level of perceived quality of the media provided with the watermark and a high robustness of the embedded watermark.

So far, improvements of the watermarking algorithms also lead to a higher complexity of the embedding process: While least significant bit embedding algorithms are fast and simple to implement and require almost no computational power, their usability for most watermarking applications is limited. State-of-the-art watermarking algorithms require transformation operations as well as windowing and the existence of perceptual models for masking the embedded watermark.

The only known approaches for improving the speed of watermark embedding processes are either so-called "bit stream embedders" where transformation operations are saved by working on already transformed compressed media data or container solutions where individual watermarking positions within a media file are pre-calculated and assembled during the actual creation of the watermarked copy.

It is also known to use robust hash functions for digital watermarking.

Robust hash concepts have been applied in digital watermarking for different reasons.

The following applications are known:
- Indexing for non-blind watermarking: When a watermarking algorithm requires the original medium to be available to detect the watermark from a marked copy, the robust hash can help to identify the required original ,
- Payload for integrity protection: Here the robust hash is stored as the watermark information to provide a description of the original content.
- Key generator: The robust hash of the original is used as a key to embed the watermark. If the original is changed, the robust hash also changes and the watermark cannot be detected due to the wrong key given by the robust hash. This can be used for integrity verification (Jiri Fridrich, Miro-slav Goljan; Robust Hash Functions for Digital Watermarking, International Symposium on Information Technology (ITCC 2000), 27-29 March 2000, Las Vegas, NV, USA, IEEE Computer Society, ISBN 0-7695-0540-6).
- Synchronization: The robust hash is used as an index to identify positions within the marked content where the watermark has been embedded. The robust hashes are often stored within a separate database. Approaches without the need of an external database are also known (Steinebach, Zmudzinksi, Neichtadt; Robust-audio-hash Synchronized Audio Watermarking; 4th International Workshop on Security in Information Systems - (WOSIS 2006), Paphos, Cyprus, Eduardo Fernández-Medina and Mariemma I. Yagüe (Eds.), pp. 58-66, 2006).

EP-A-1 569 223 discloses the pre-calculation of data sections watermarked with both "0" and "1", but uses the "original" media data to creates a kind of repository to embed different sequences of the watermarking key to distribute the media data to different users.

Fridrich J. et al: "Robust hash functions for digital watermarking" Proceedings International Conference on Information Technology: Coding and Computing (Cat. no. PR00540) IEEE Comput. Soc Los Alamitos, CA, USA, 2000, pages 178-183, XP002474318 ISBN: 0-7695-0540-6 uses a robust hash function to "mark" a data media in such a way to render it robust to different processing steps.

It is an object of the present invention to further improve the speed of watermark embedding.

For solving the problems posed in the prior art, the present invention provides a method for embedding a multi-bit digital watermark in media data such as video, image, and/or audio data comprising a plurality of consecutive sections, the method comprising
- providing a plurality of test data sections,
- calculating first and second watermark signals presenting first and second binary states of a bit of a digital watermark embeddable in the test data sections,
- transforming the test data sections into coded data using robust hash function as a transformation function for generating a set of different pre-calculated coded data, wherein the transformation function generates (i) identical coded data for data sections having no perceivable differences and (ii) different coded data for data sections having perceivable differences,
- providing media data and dividing them into consecutive sections,
- transforming each media data section into a coded data using the same transformation function as for generating the set of coded data,
- deciding whether a bit of a digital watermark having the first binary state or the second binary state has to be embedded into the respective media data section,
- selecting the first or second watermark signal associated to that coded data of the set of pre-calculated coded data which are the same as the coded data of the respective media data section, and
- embedding the selected watermark signal into the respective media data section.

Accordingly, the present invention suggests to pre-calculate first and second watermark signals representing first and second binary states of a bit of a digital watermark or a plurality of sections of media data to be watermarked. The calculation of the watermark signals for each data section is performed in advance such that when embedding the watermark signal into the respective data section no perceivable loss of quality is involved. This is the basic concept of the embedment of digital watermarks in media data.

According to the invention, the time consuming process of finding the suitable watermark signal (representing a binary "0" or "1" bit of a digital watermark) is eliminated when watermarking media data in that for marking a data section in media data that watermark signal is used which during pre-calculation was calculated for a data section with no perceivable difference to the respective data section of the media data, This is guaranteed by the use of a transformation function by which in a pre-calculation stage of the invention a plurality of data sections were mapped to coded data. The nature of the transformation function is that identical coded data are generated for data sections having no perceivable differences and that different coded data are generated for data sections of media data having perceivable differences.

According to the invention, the embedment process when digitally watermarking media data can be performed by a simple signal adding function for adding the pre-calculated watermark signal to a media data section.

The concept behind the present invention is to set up a collection of already computed watermarking signals and mix them with the cover signal for fast and simple embedding. To ensure that the watermark signal is well suited for the embedding position with respect to masking, a robust hash function is used.

The invention makes use of the idea that as watermark embedding and masking is controlled by perceptual models which are coarser than the actual content, similar passages of a media signal will be marked with an almost identical watermark. The approach according to the invention is to calculate a sufficient number of individual watermarks suited for a given media section which is identified by e.g. a robust hash function. For each media section type potentially corresponding to a robust hash, one watermark with bit value "0" and another one with bit value "1" are calculated. Thereby watermark lookup collection comprising pre-calculated watermarks is created. The robust hash is now used as an index to this lookup table. When a media file is to be watermarked, the robust hash is calculated for a section and the fitting watermark with the correct bit value is taken from the lookup collection. This watermark is then added to the signal by simply mixing both signals. Then the algorithm proceeds to the next section.

The present invention will be described in more detail referring to an embodiment thereof as well as to the drawings in which:
- Fig. 1: is a illustration of the process for generating a watermark lookup collection (library) for audio data, and
- Fig. 2: is a schematic illustration of how to use the watermark library to embed a digital watermark into audio data.

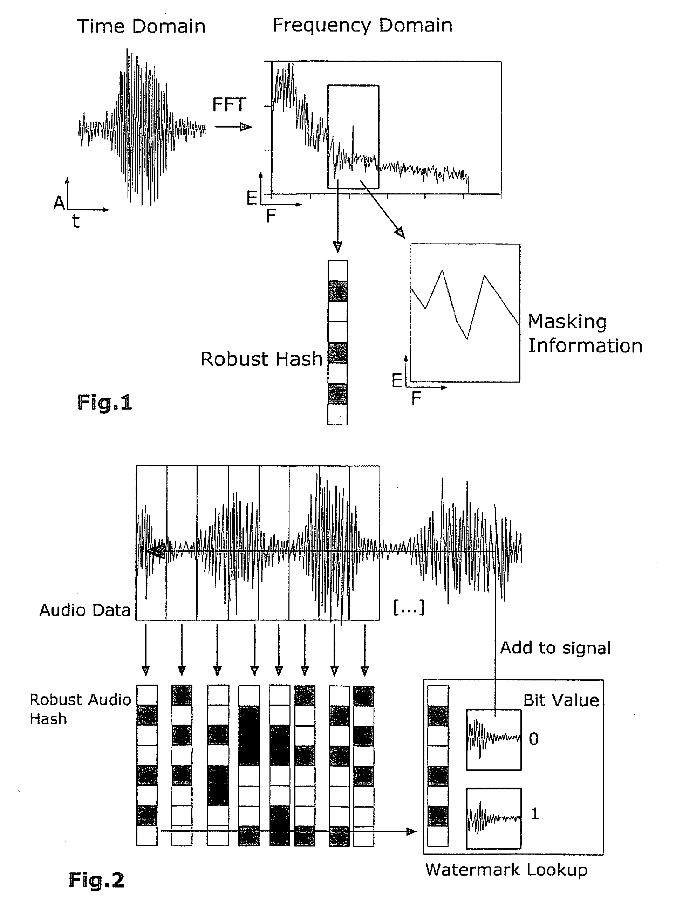

According to Fig. 1, the watermark lookup collection generation is based on calculating robust hash values as well as marking curves for a set of audio frames (sections).

Fig. 2 illustrates the embedding concept for audio data wherein the robust hash values are derived from the audio data. The robust hash values are matched within the watermark lookup collection, Depending on the bit value ("binary 0" or "binary 1") to be embedded, the watermark signal is added to the audio data at the position of the corresponding hash value.

The embedding of the watermark with help of robust hash values can be done in the following steps:
(1) **Generation of the watermark lookup collection.** Based on the individual key of the user, the watermark collection is pre-generated. The masking information used during watermark generation is based on a media section which is related to a robust hash. In this way, for each robust hash value, one watermark is generated for both potential bit values. Fig. 1 shows the core of this process for audio data. The result is a collection of watermarks depending on the secret key of the user for security reasons (not relevant for the present invention) and the masking curve of the media data relating to the robust hash for quality insurance. The robust hash can be seen as an index to access the watermark based on the fitting masking curve for the current media data section.
(2) **Media parsing.** When the user wants to embed a watermark in a media file, he needs a watermark lookup collection as generated in step (1). He first calculates the robust hash of the first section of the media file.
(3) **Lookup collection access.** The robust hash is used to access the watermark lookup collection. Depending on the watermarking bit to be embedded at the current media file position, the algorithm receives the pre-generated watermark for bit value "1" or "0" from the collection.
(4) **Watermark embedding.** The watermark retrieved from the watermark lookup collection is added to the current media data section. As its robust hash is related to the masking curve used to pre-generate the watermark, the transparency of the embedded watermark and therefore the quality of the marked cover is ensured. The addition of the watermark can be done with minimal effort, e.g. by adding the watermark directly to the media information, therefore speeding up the embedding process.
(5) The algorithm proceeds in the sequence of media data sections and embedded additional watermarking bits as described in steps (2) to (4) as long as there is media data to be marked.

Fig. 2 illustrates the steps (2) to (4). It must be noted that step (1) is only 8 performed once for each user and media data type as long as the user's secret key is not changed. The reason an individual collection needs to be generated only lies within the security requirements. If no key-based security is needed, all users of the algorithm could use one watermark lookup collection. In that case, step (1) would not be necessary for individual users, but they would access a global pre-generated collection provided together with the algorithm.

## Claims

1. Method for embedding a multi-bit digital watermark in media data such as video, image, and/or audio data comprising a plurality of consecutive sections, the method comprising
- providing a plurality of test data sections,
- calculating first and second watermark signals presenting first and second binary states of a bit of a digital watermark embeddable in the test data sections,
- transforming the test data sections into coded data using a transformation function for generating a set of different pre-calculated coded data, wherein the transformation function generates (i) identical coded data for data sections having no perceivable differences and (ii) different coded data for data sections having perceivable differences,
- providing media data and dividing them into consecutive sections,
- transforming each media data section into a coded data using the same transformation function as for generating the set of coded data,
- deciding whether a bit of a digital watermark having the first binary state or the second binary state has to be embedded into the respective media data section,
- selecting the first or second watermark signal associated to that coded data of the set of pre-calculated coded data which are the same as the coded data of the respective media data section, and
- embedding the selected watermark signal into the respective media data section
- wherein the transformation function is a robust hash function.

2. Method according to claim 1, wherein the step of embedding the selected watermark signal into the respective media data section comprises adding the selected watermark signal to the respective media data section.

## Patentansprüche

1. Verfahren zum Einbetten eines digitalen Multi-Bit-Wasserzeichens in Mediendaten, wie Video-, Bild- und/oder Audiodaten, mit mehreren aufeinanderfolgenden Abschnitten, wobei das Verfahren die folgenden Schritte aufweist:
- Vorsehen mehrerer Testdatenabschnitte,
- Berechnen eines ersten und eines zweiten Wasserzeichensignals, die einen ersten und einen zweiten Binärzustand eines Bits eines in den Testdatenabschnitten einbettbaren digitalen Wasserzeichens wiedergeben,
- Umwandeln der Testdatenabschnitte in codierte Daten unter Verwendung einer Transformationsfunktion zum Erzeugen eines Satzes unterschiedlicher vorberechneter codierter Daten, wobei die Transformationsfunktion ferner erzeugt: (i) identische codierte Daten für Datenabschnitte, die keine erkennbaren Unterschiede aufweisen, und (ii) unterschiedliche codierte Daten für Datenabschnitte mit erkennbaren Unterschieden,
- Bereitstellen von Mediendaten und Aufteilen derselben in aufeinanderfolgende Abschnitten,
- Umwandeln jeder Mediendatenabschnitt in ein codiertes Datenelement unter Verwendung der selben Transformationsfunktion wie zur Erzeugung des Satzes codierter Daten,
- Entscheiden, ob ein Bit eines digitalen Wasserzeichens, das den ersten Binärzustand oder den zweiten Binärzustand aufweist, in den jeweiligen Mediendatenabschnitt einzubetten ist,
- Wählen des ersten oder des zweiten Wasserzeichensignals, das denjenigen codierten Daten des Satzes der vorberechneten codierten Daten zugeordnet ist, welche gleich den codierten Daten des jeweiligen Mediendatenabschnitts sind, und
- Einbetten des gewählten Wasserzeichensignals in den jeweiligen Wasserzeichendatenabschnitt,
- wobei die Transformationsfunktion eine robuste Hashfunktion ist.

2. Verfahren nach Anspruch 1, bei welchem der Schritt des Einbettens des gewählten Wasserzeichensignals in den jeweiligen Mediendatenabschnitt das Hinzufügen des gewählten Wasserzeichensignals zu dem jeweiligen Mediendatenabschnitt umfasst.

## Revendications

1. Procédé pour insérer un filigrane numérique multi-bits dans des données de média, comme des données vidéo, image et/ou audio, comprenant plusieurs sections consécutives, le procédé comprenant les étapes suivantes:
- prévoir plusieurs sections de données de test,
- calculer des premiers et deuxièmes signaux de filigrane présentant un premier et un deuxième état binaire d'un bit d'un filigrane numérique insérable dans les sections de données de test,
- transformer lesdites sections de données de test en données encodées en utilisant une fonction de transformation pour générer un groupe de différentes données codées pré-calculées, ladite fonction de transformation générant: (i) des données codées identiques pour des sections de données ne pas présentant des différences détectables, et (ii) des données codées différentes pour des sections de données présentant des différences détectables,
- fournir des données de média et diviser celles-ci en sections consécutives,
- transformer chaque section de données de média en une donnée codée en utilisant la même fonction de transformation qu'en générant ledit groupe de données codées,
- décider si un bit d'un filigrane numérique présentant le premier état binaire ou le deuxième état binaire faut être inséré dans une section de données de média respective,
- choisir ledit premier ou deuxième signal de filigrane associé à ces données codées du groupe de données codées pré-calculées, qui sont identiques aux données codées de ladite section de données de média respective, et
- insérer ledit signal de filigrane choisi dans ladite section de données de média respective,
- ladite fonction de transformation étant une fonction de hachage robuste.

2. Procédé selon la revendication 1, dans lequel ladite étape d'insertion du signal de filigrane choisi dans ladite section de données de média respective comprend l'étape d'ajouter le signal de filigrane choisi à ladite section de données de média respective.
